# EUROPÄISCHE PATENTSCHRIFT

(11) **EP 3 865 264 B1**
(45) Veröffentlichungstag und Bekanntmachung des Hinweises auf die Patenterteilung: **15.01.2025**
(21) Anmeldenummer: 20157308.6
(22) Anmeldetag: 14.02.2020
(51) Int. Cl.: B27B 17/12, B23D 59/02, B23D 59/04

(54) **HANDGEFÜHRTES BEARBEITUNGSGERÄT MIT ELEKTRISCHEM ANTRIEBSMOTOR**
HANDHELD MACHINING APPARATUS WITH ELECTRIC DRIVE MOTOR
APPAREIL D'USINAGE GUIDÉ À LA MAIN POURVU DE MOTEUR D'ENTRAÎNEMENT ÉLECTRIQUE

(43) Veröffentlichungstag der Anmeldung: 18.08.2021
(73) Patentinhaber: Andreas Stihl AG & Co. KG, 71336 Waiblingen (DE)
(72) Erfinder: HEINZELMANN, Georg, 71364 Winnenden (DE)
(74) Vertreter: Patentanwälte Ruff, Wilhelm, Beier, Dauster & Partner mbB

(56) Entgegenhaltungen:
- EP-A2- 3 195 721
- WO-A1-82/00508
- DE-A1- 102010 033 489
- DE-A1- 102019 000 152
- DE-U1- 8 816 301
- US-A1- 2011 005 088

## Beschreibung

Die Erfindung bezieht sich auf ein handgeführtes Bearbeitungsgerät nach dem Oberbegriff des Anspruchs 1. Derartige Geräte sind beispielsweise in den Bereichen der Garten- und Forsttechnik sowie der Bau- und Heimwerkertechnik gebräuchlich. Insbesondere kann das Gerät in entsprechenden Realisierungen der Erfindung als Motorsäge oder Trennschleifer ausgeführt sein.

Derartige Bearbeitungsgeräte beinhalten ein Motorgehäuse, einen in einem Seitenbereich des Motorgehäuses angeordneten Haltekörper, der insbesondere als Halteplatte ausgebildet sein kann und zum Halten eines vom Motorgehäuse abragenden Führungselements für ein rotierendes oder um das Führungselement umlaufenden Bearbeitungswerkzeugs dient, und einen im Motorgehäuse angeordneten elektrischen Antriebsmotor zum Antreiben des Bearbeitungswerkzeugs. Der Antriebsmotor besitzt eine mit einem Werkzeugantriebsbereich durch den Haltekörper hindurch führende Antriebswelle und einen drehfest an der Antriebswelle gehaltenen Rotor.

Der Haltekörper kann z.B. ein Auslegerkörper sein, der einen motorgehäuseseitigen Bereich und einen vom Motorgehäuse abragenden Bereich zum rotationsbeweglichen Halten des Bearbeitungswerkzeugs aufweist. Im Auslegerkörper kann drehfest auf dem Werkzeugantriebsbereich der Antriebswelle ein Werkzeugkoppelelement zum Ankoppeln des Bearbeitungswerkzeugs an die Antriebswelle angeordnet sein.

Des Weiteren weist das Bearbeitungsgerät einen an einen Schmiermittelpumpenantriebsbereich der Antriebswelle angekoppelten Schmiermittelpumpenantrieb zum Antreiben einer im Motorgehäuse angeordneten Schmiermittelpumpe zur Versorgung des Bearbeitungswerkzeugs mit Schmiermittel auf, z.B. mit Schmieröl, wozu der Schmiermittelpumpenantrieb z.B. ein drehfest auf einem Schmiermittelpumpenantriebsbereich der Antriebswelle angeordnetes Schmiermittelpumpenkoppelelement aufweisen kann.

Das Bearbeitungsgerät kann z.B. als Motorsäge ausgeführt sein, bei welcher der Haltekörper als motorgehäuseseitigen Bereich eine Schienenbefestigungsplatte zur außenseitigen Befestigung einer Führungsschiene als vom Motorgehäuse abragenden Bereich zum umlaufend rotationsbeweglichen Halten einer Sägekette als Bearbeitungswerkzeug aufweist. Entsprechend bilden in diesem Fall der Werkzeugantriebsbereich einen Kettenantriebsbereich und das Werkzeugkoppelelement ein Kettenkoppelelement.

Motorsägen dieser Art sind vor allem als sogenannte Akku-Sägen, bei denen der elektrische Antriebsmotor von einer vorzugsweise am oder im Motorgehäuse angeordneten Akkumulatorbatterie gespeist wird, in Gebrauch und werden beispielsweise von der Anmelderin in unterschiedlichen Ausführungen hergestellt und vertrieben, sowohl vom sogenannten Rearhandle-Typ mit an einer Rückseite des Motorgehäuses angeordnetem Hauptgriff wie auch vom sogenannten Tophandle-Typ mit an einer Oberseite des Motorgehäuses angeordnetem Hauptgriff. Durch den Schmiermittelpumpenantrieb wird eine Schmiermittelpumpe, mittels der das Schmiermittel von einem Schmiermitteltank zur Schienenbefestigungsplatte und damit zur Sägekette gefördert werden kann, von dem Antriebsmotor angetrieben, der auch die Sägekette antreibt. Der Statorträger des Antriebsmotors ist üblicherweise als hülsenförmiges Bauteil vorgefertigt, das einen Stator-/Rotoraufbau des Antriebsmotors trägt und über einen Flansch mittels Schraubverbindungen an einer Innenseite der Schienenbefestigungsplatte gehalten ist.

Bei diesen marktgängigen Motorsägen befindet sich der Schmiermittelpumpenantriebsbereich der Antriebswelle, auf dem das Schmiermittelpumpenkoppelelement angeordnet ist, üblicherweise zwischen dem Kettenantriebsbereich, auf dem das Kettenkoppelelement zum Ankoppeln der Sägekette an die Antriebswelle angeordnet ist, und dem Rotor bzw. dem Stator. Durch diese Positionierung des Schmiermittelpumpenkoppelelements lassen sich die Längen von Schmiermittelleitungen, die zum Schmiermitteltransport von einem Schmiermitteltank über die Schmiermittelpumpe zur Schienenbefestigungsplatte benötigt werden, relativ kurz halten.

In der Offenlegungsschrift DE 10 2010 033 489 A1 ist ein handgeführtes Bearbeitungsgerät ist in Form einer Motorsäge offenbart, bei der sich in der oben erwähnten Weise der Schmiermittelpumpenantriebsbereich zwischen dem Kettenantriebsbereich und dem Stator bzw. Rotor befindet und der Statorträger als hülsenförmiges Bauteil vorgefertigt an der Schienenbefestigungsplatte gehalten ist. Speziell kämmt dort ein Schmiermittelpumpenritzel mit einem topfförmigen Schneckenrad, das an seinem Topfrand drehfest am Boden einer topfförmigen Bremstrommel gehalten ist, die ihrerseits drehfest auf der Antriebswelle sitzt.

Die Patentschrift JP 6266304 B2 offenbart eine Stichsäge mit einem translatorisch hin und her bewegten Sägewerkzeug, das von einem elektrischen Antriebsmotor angetrieben wird, dessen Stator-/Rotoraufbau an einem hülsenförmigen Trägerteil gehalten ist, das von einem inneren Gehäusekörper abragt, in dem ein zwischen dem Antriebsmotor und dem Sägewerkzeug wirkendes Getriebe angeordnet ist.

Weitere handgeführte Bearbeitungsgeräte ähnlicher Art sind z.B. in den Offenlegungsschriften EP 3 195 721 A2, WO 82/00508 A1 und US 2011/005088 A1 sowie in der Gebrauchsmusterschrift DE 88 16 301 U1 offenbart.

Die Offenlegungsschrift DE 10 2019 000 152 A1 offenbart ein handgeführtes Bearbeitungsgerät der eingangs genannten Art, d.h. nach dem Oberbegriff des Anspruchs 1, in Form einer Ketten- bzw. Motorsäge. Bei Bearbeitungsgeräten dieser Art befinden sich der Schmiermittelpumpenantriebsbereich und der Werkzeugantriebsbereich der Antriebswelle auf entgegengesetzten Seiten des Rotors.

Der Erfindung liegt als technisches Problem die Bereitstellung eines handgeführten Bearbeitungsgeräts der eingangs genannten Art zugrunde, das gegenüber dem oben erwähnten Stand der Technik vorteilhafte technische Neuerungen insbesondere hinsichtlich der positionellen Konfiguration des Schmiermittelpumpenantriebs und/oder hinsichtlich der Anbindung des Antriebsmotors an das Motorgehäuse aufweist.

Die Erfindung löst dieses Problem durch die Bereitstellung eines handgeführten Bearbeitungsgeräts mit den Merkmalen des Anspruchs 1. Das Bearbeitungsgerät kann insbesondere eine Motorsäge sein.

Das erfindungsgemäße Bearbeitungsgerät umfasst, wie bereits erwähnt, ein Motorgehäuse, einen in einem Seitenbereich des Motorgehäuses angeordneten Haltekörper zum Halten eines vom Motorgehäuse abragenden Führungselements für ein rotierendes oder um das Führungselement umlaufenden Bearbeitungswerkzeugs, einen im Motorgehäuse angeordneten elektrischen Antriebsmotor zum Antreiben des Bearbeitungswerkzeugs, wobei der Antriebsmotor eine mit einem Werkzeugantriebsbereich durch den Haltekörper hindurch führende Antriebswelle und einen drehfest an der Antriebswelle gehaltenen Rotor aufweist, und einen an einen Schmiermittelpumpenantriebsbereich der Antriebswelle angekoppelten Schmiermittelpumpenantrieb zum Antreiben einer im Motorgehäuse angeordneten Schmiermittelpumpe zur Versorgung des Bearbeitungswerkzeugs mit Schmiermittel. Dabei befinden sich der Schmiermittelpumpenantriebsbereich und der Werkzeugantriebsbereich der Antriebswelle auf entgegengesetzten Seiten des Rotors.

Gegenüber der konventionellen Positionierung des Schmiermittelpumpenkoppelelements zwischen Rotor bzw. Stator und Werkzeugantriebsbereich der Antriebswelle und damit auf einer nach außen gewandten Seite des Rotors/Stators des elektrischen Antriebsmotors bedeutet dies eine Verlagerung auf die vom Werkzeugantriebsbereich der Antriebswelle abgewandte, vom Motorgehäuse nach innen gewandte Seite des Rotors/Stators. Dies folgt nicht dem gängigen Bestreben, das Schmiermittelpumpenkoppelelement auf der Antriebswelle in einem Bereich zu platzieren, der minimale Schmiermittelleitungslängen ermöglicht, jedoch hat sich in nicht zu erwartender Weise gezeigt, dass sich mit dieser Maßnahme anderweitige Vorteile erzielen lassen, denen in vielen Anwendungsfällen größere Bedeutung zukommen kann.

So lässt sich mit dieser Wahl des Schmiermittelpumpenantriebsbereichs der Antriebswelle auf der vom Werkzeugantriebsbereich der Antriebswelle abgewandten Rotor-/Statorseite des Antriebsmotors die Antriebswelle gegenüber herkömmlichen Ausführungen verkürzen, und der eigentliche Aufbau des Antriebsmotors, d.h. sein Stator- und Rotoraufbau, kann näher am Werkzeugantriebsbereich liegen als bei den besagten herkömmlichen Bauformen mit zwischen diesem Stator-/Rotoraufbau und dem Werkzeugantriebsbereich liegendem Schmiermittelpumpenantriebsbereich. Der geringere Abstand des Stator-/Rotoraufbaus zum Werkzeugantriebsbereich bietet Vorteile hinsichtlich der Schwerpunktlage des Geräts und damit für deren Handhabung. Speziell lässt sich durch die Verlagerung des Stator-/Motoraufbaus in Richtung Werkzeugantriebsbereich der Antriebswelle der Schwerpunkt des Antriebsmotors näher an die Längsmittelachse des Geräts heranrücken, was dem Benutzer die Schwenkbarkeit des Geräts im Gebrauch erleichtern kann.

Als weiterer Vorteil kann bei Bedarf zur Lagerung des Antriebsmotors bei Motorsägen ein Motorlager mit einem Hauptlager vorgesehen sein, das mit deutlich kürzerem Abstand zum Werkzeugantriebsbereich als bei herkömmlichen Motorsägen angeordnet sein kann, was die Kraftbelastungen merklich reduzieren kann. Insbesondere können Kraftmomentbelastungen verringert werden, die von Querkräften auf die Führungsschiene der Sägekette einwirken. Aufgrund der geringeren Kraftbelastungen können für die Antriebswelle und den Statorträger gewichtsreduzierte Ausführungen, wie eine Antriebswelle mit kleinerem Wellendurchmesser und/oder ein kleiner gebauter Statorträger, verwendet werden, was zu einem geringen Gesamtgewicht der Motorsäge beiträgt.

Erfindungsgemäß umfasst der Antriebsmotor einen Statorträger, der einteilig mit einem motorgehäuseinnenseitigen Bereich des Haltekörpers ausgebildet ist. An dem Statorträger kann ein Stator des Antriebsmotors drehfest gehalten sein, wobei die Antriebswelle sich durch ihn hindurch erstrecken und/oder an ihm mittels eines Motorlagers gelagert sein kann.

Diese einteilige Ausführung von Statorträger und einem motorgehäuseinnenseitigen Bereich des Haltekörpers ermöglicht eine entsprechende Reduzierung der Anzahl von Bauteilen für das Bearbeitungsgerät und eine entsprechende Verringerung des Montageaufwands. Da auf diese Weise Verbindungsmittel zwischen Statorträger und Schienenbefestigungsplatte entfallen, erübrigt es sich, für diese Verbindungsmittel auf ausreichende Festigkeit und gewünschtes Kraftübertragungsverhalten achten zu müssen.

In einer Weiterbildung der Erfindung befindet sich der Schmiermittelpumpenantriebsbereich an einem motorgehäuseinneren Stirnendabschnitt der Antriebswelle. Dies bedeutet eine Positionierung eines Schmiermittelpumpenkoppelelements des Schmiermittelpumpenantriebs am innenliegenden Stirnende der Antriebswelle und damit maximal entfernt vom Werkzeugantriebsbereich am gegenüberliegenden Wellenende. In alternativen Ausführungen befindet sich der Schmiermittelpumpenantriebsbereich zwischen diesem motorgehäuseinneren Stirnendabschnitt der Antriebswelle und dem Rotor.

In einer Weiterbildung der Erfindung besitzt die Motorsäge ein Lüftergebläse mit einem vom Antriebsmotor antreibbaren, koaxial zur Antriebswelle angeordneten Lüfterrad, wobei sich der Schmiermittelpumpenantriebsbereich auf einer dem Rotor abgewandten Seite des Lüfterrades befindet oder ein Schmiermittelpumpenkoppelelement des Schmiermittelpumpenantriebs einteilig mit dem Lüfterrad gebildet ist. In dieser Weiterbildung dient der Antriebsmotor auch zum Antrieb des Lüftergebläses, wobei das Lüfterrad einteilig mit dem Rotor ausgebildet oder nahe am Rotor platziert sein kann, insbesondere zwischen dem Rotor und dem Schmiermittelpumpenantriebsbereich. Bei Bedarf sind das Lüfterrad und das Schmiermittelpumpenkoppelelement von einem gleichen Bauteil gebildet. Dies kann Bauraum einsparen und zur Erzielung einer kurzen Baulänge für die Antriebswelle beitragen. In alternativen Ausführungen befindet sich der Schmiermittelpumpenantriebsbereich zwischen dem Rotor und dem Lüfterrad.

In einer Weiterbildung der Erfindung besitzt die Motorsäge eine Abstützeinrichtung zwischen einem Schmiermittelpumpengehäuse und der Antriebswelle, wobei die Abstützeinrichtung einen lagerfreien Abstützabschnitt des Schmiermittelpumpengehäuses oder eine Pumpengehäuse-Lagereinheit beinhaltet. Mit dieser Abstützeinrichtung kann je nach Bedarf und Anwendungsfall das Schmiermittelpumpengehäuse ausschließlich oder zusätzlich an der Antriebswelle abgestützt sein, oder die Antriebswelle kann zusätzlich durch das dann ausreichend steif ausgeführte Schmiermittelpumpengehäuse geführt bzw. gelagert sein. In alternativen Ausführungen fehlt eine solche Abstützeinrichtung, und das Schmiermittelpumpengehäuse ist dann allein mit anderen Bauteilen im Motorgehäuse verbunden bzw. an diesen abgestützt.

In einer Ausgestaltung der Erfindung besitzt die Motorsäge eine Schmiermittelpumpengehäusehalterung, mit der das Schmiermittelpumpengehäuse am Motorgehäuse oder an einem mit dem Motorgehäuse starr verbundenen Bauteil gehalten ist. Dies stellt eine vorteilhafte Realisierung für eine optionale zusätzliche Abstützung des Schmiermittelpumpengehäuses direkt oder indirekt am Motorgehäuse dar.

In einer Weiterbildung der Erfindung ist auf der Antriebswelle axial zwischen dem Rotor und dem Werkzeugantriebsbereich drehfest eine Bremstrommel mit einem topfförmigen Querschnitt angeordnet, und ein Motorlager für die Antriebswelle weist eine axial partiell oder vollständig mit der Bremstrommel überlappende Lagereinheit auf. Diese Ausführung ermöglicht vorteilhaft das Bereitstellen einer mechanischen Bremse für den Antriebsmotor bei gleichzeitiger Erzielung einer in axialer Richtung kompakten Bauform für den Antriebsmotoraufbau. Dazu tragen der topfförmige Querschnitt der Bremstrommel und die axiale Überlappung der Lagereinheit für die Antriebswelle mit der Bremstrommel bei. Die axiale Überlappung ist je nach Ausführung und Bedarf vollständig oder partiell. Im ersteren Fall liegt die Lagereinheit vollständig innerhalb der axialen Bauhöhe, d.h. der Topftiefe, der Bremstrommel, im anderen Fall erstreckt sich die Lagereinheit in axialer Richtung zum Teil innerhalb und zum übrigen Teil außerhalb der axialen Ausdehnung der Bremstrommel. In alternativen Ausführungen wird auf die Bremstrommel oder jedenfalls auf eine axiale Überlappung einer Lagereinheit für die Antriebswelle mit einer Bremstrommel verzichtet.

Zudem kann die Lagereinheit in dieser Realisierung trotz Vorhandenseins der mechanischen Bremse mit relativ geringem Abstand zum Werkzeugantriebsbereich der Antriebswelle positioniert werden, was hinsichtlich der Aufnahme von auftretenden Kraftbelastungen günstig ist. Alternativ sind andere Lagerungen möglich, z.B. mittels zweier Lagerbauteile auf der Innenseite des Auslegerbefestigungsteils.

In einer Weiterbildung der Erfindung ist das Bearbeitungsgerät als Motorsäge ausgeführt, und der Haltekörper ist als ein Auslegerkörper in Form einer Schienenbefestigungsplatte gebildet, die zur außenseitigen Befestigung einer Führungsschiene als Führungselement zum umlaufend rotationsbeweglichen Halten einer Sägekette als Bearbeitungswerkzeug eingerichtet ist. Alternativ kann das Bearbeitungsgerät z.B. als Trennschleifer ausgeführt sein. In diesem Fall ist der Haltekörper ein Auslegerkörper, in dem ein Riemenantrieb oder dgl. zur Drehmomentübertragung von der Antriebswelle auf eine parallel versetzte Werkzeugwelle untergebracht ist, um die in diesem Fall das Bearbeitungswerkzeug rotiert.

In einer Weiterbildung der Erfindung ist der Haltekörper aus einem biegesteifen Kunststoff- oder Metallmaterial gebildet. Dies stellt vorteilhafte materialtechnische Realisierungen für den Haltekörper dar.

In einer Ausgestaltung der Erfindung ist der Haltekörper ein Magnesiumgussteil. Dies stellt eine hinsichtlich ausreichender Festigkeit und niedrigem Gewicht vorteilhafte Ausführung für den Haltekörper dar. In alternativen Ausführungen ist Haltekörper aus einem anderen metallischen Werkstoff oder einem vorzugsweise faserverstärkten Kunststoff-Werkstoff gebildet.

In einer Weiterbildung der Erfindung ist ein Stator des Antriebsmotors auf den Statorträger aufgepresst gehalten. Dies stellt eine hinsichtlich Festigkeit und Montageaufwand günstige Befestigung des Stators auf dem Statorträger dar. Alternativ kann der Stator auf andere herkömmliche Weise drehfest am Statorträger gehalten sein, z.B. mittels einer Schraub- oder Klebeverbindung.

In einer Weiterbildung der Erfindung beinhaltet ein Motorlager des Antriebsmotors auf einer Innenseite und einer Außenseite des Haltekörpers jeweils mindestens eine Lagereinheit. Dies stellt in entsprechenden Anwendungsfällen eine günstige Abstützung des Antriebsmotors auf beiden Seiten des Haltekörpers dar.

Vorteilhafte Ausführungsformen der Erfindung sind in den Zeichnungen dargestellt. Diese und weitere vorteilhafte Ausführungsformen der Erfindung werden nachfolgend näher beschreiben. Hierbei zeigen:
Fig. 1 eine ausschnittweise Längsschnittansicht einer vorliegend interessierenden Teils einer Motorsäge mit einteiliger Ausführung von Schienenbefestigungsplatte und Statorträger und mit einer Antriebswelle mit Werkzeugantriebsbereich und Schmiermittelpumpenantriebsbereich auf einer dem Werkzeugantriebsbereich abgewandten Seite eines Stators eines elektrischen Antriebsmotors,
Fig. 2 eine Schnittansicht entsprechend Fig. 1 für eine Variante hinsichtlich Lagerung der Antriebswelle und Ankopplung eines Schmiermittelpumpenantriebs am Schmiermittelpumpenantriebsbereich,
Fig. 3 eine schematische Perspektivansicht auf eine Schmiermittelpumpenantriebsseite der Ausführungsvariante von Fig. 2,
Fig. 4 eine Schnittansicht entsprechend Fig. 1 für eine weitere Ausführungsvariante,
Fig. 5 eine Schnittansicht entsprechend Fig. 1 für noch eine weitere Variante mit außenliegendem statt innenliegendem Stator des Antriebsmotors,
Fig. 6 eine Perspektivansicht auf eine Schmiermittelpumpenantriebsseite der Variante von Fig. 5,
Fig. 7 eine zu Fig. 1 ähnliche Schnittansicht mit isolierter Darstellung von Antriebsmotor und einteilig mit einem motorgehäuseseitigen Bereich eines Haltekörpers gebildetem Statorträger und
Fig. 8 eine Schnittansicht entsprechend Fig. 7 für eine modifizierte Ausführungsvariante.

Das in den Figuren in verschiedenen exemplarischen Ausführungen jeweils nur in einem vorliegend interessierenden Bereich gezeigte, handgeführte Bearbeitungsgerät ist als eine elektrische Motorsäge konfiguriert, kann jedoch in alternativen Realisierungen in analoger Weise als Trennschleifer oder als ein anderes handgeführtes Gerät insbesondere aus dem Bereich der Garten- und Forsttechnik sowie der Bau- und Heimwerkertechnik konfiguriert sein, das mit den entsprechenden Gerätekomponenten ausgerüstet ist.

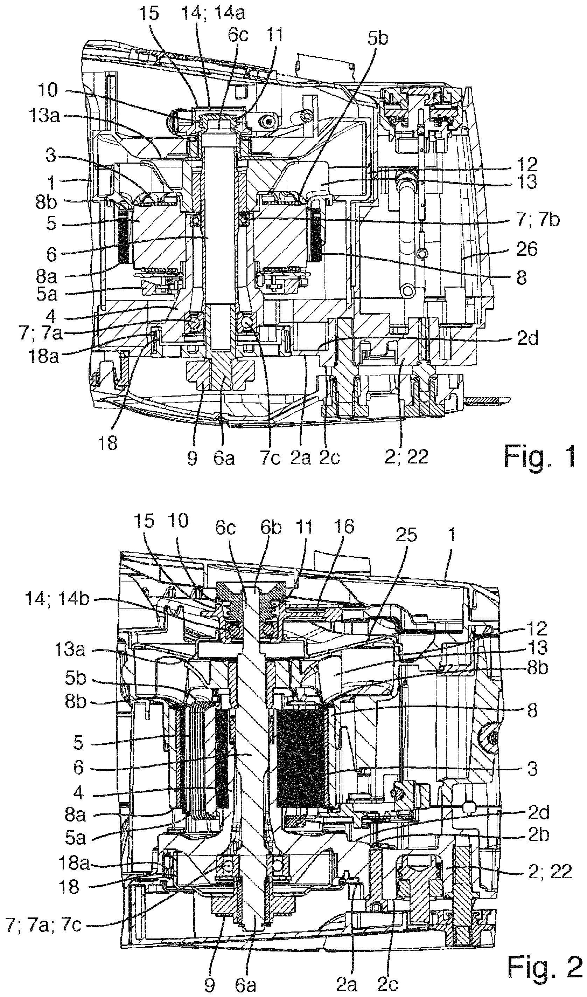

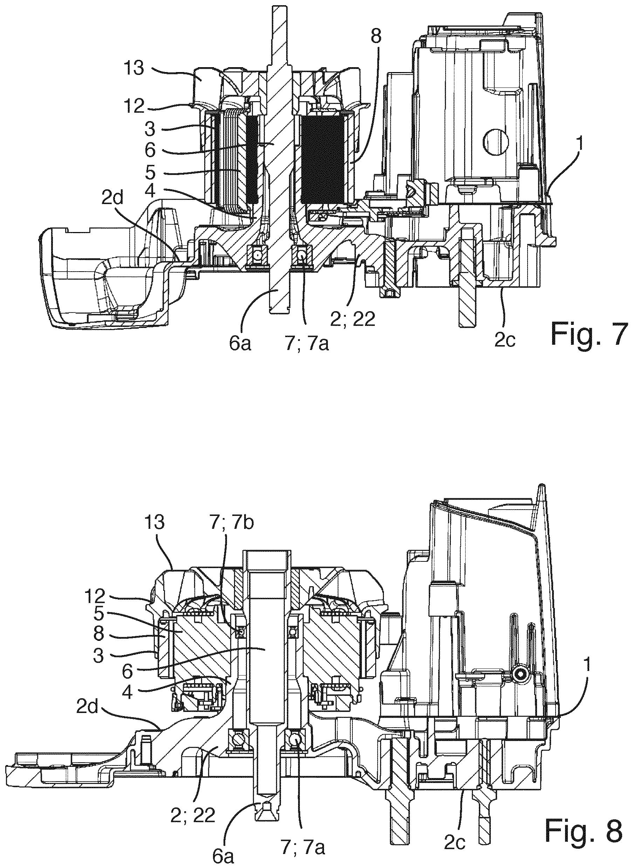

Das handgeführte Bearbeitungsgerät beinhaltet in den gezeigten Ausführungen der Fig. 1 bis 8 ein Motorgehäuse 1 und einen in einem Seitenbereich des Motorgehäuses 1 angeordneten Haltekörper 2. In den Ansichten der Fig. 1, 2, 4, 5, 7 und 8 weist dieser Seitenbereich des Motorgehäuses 1 jeweils nach unten. Der Haltekörper 2 ist zum Halten eines vom Motorgehäuse 1 abragenden Führungselements für ein rotierendes oder um das Führungselement umlaufendes Bearbeitungswerkzeug eingerichtet. Im Fall einer Motorsäge ist das Bearbeitungswerkzeug eine Sägekette, die um eine als Führungselement fungierende Führungsschiene umläuft. Im Fall eines Trennschleifers bildet der Haltekörper einen Auslegerkörper, der vom Motorgehäuse 1 abkragt und eine Lagerung für eine rotierende Trennscheibe aufweist und ein Rotationsübertragungsglied z.B. in Form eines umlaufenden Antriebsriemens aufnimmt.

In entsprechenden Ausführungen hält der Haltekörper 2, wie in den gezeigten Beispielen, das Führungselement für das Bearbeitungswerkzeug an einem motorgehäuseaußenseitigen Bereich 2c.

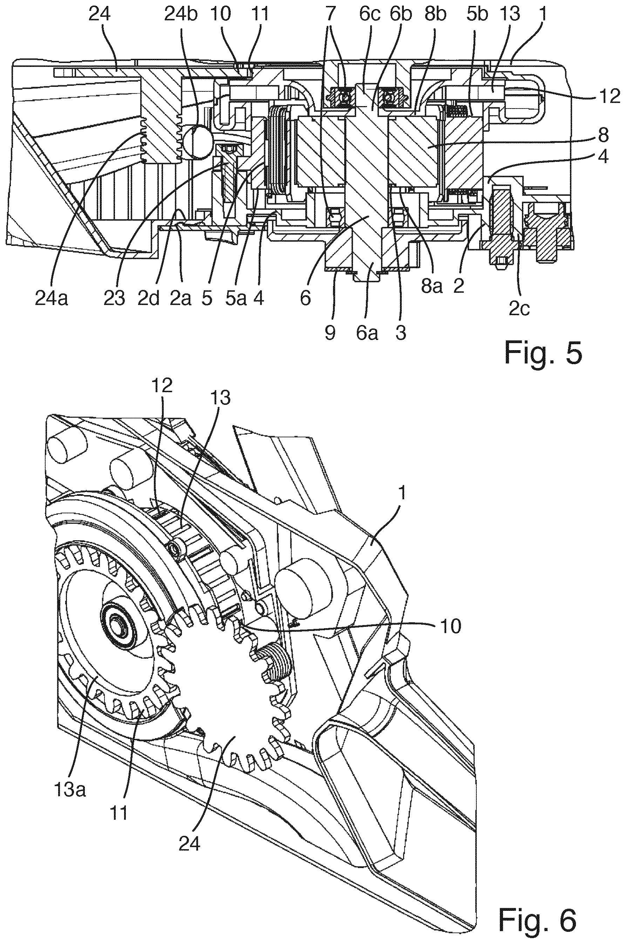

Des Weiteren beinhaltet das Bearbeitungsgerät einen im Motorgehäuse 1 angeordneten elektrischen Antriebsmotor 3 zum Antreiben des Bearbeitungswerkzeugs, wobei der Antriebsmotor 3 eine durch den Haltekörper 2 hindurchführende Antriebswelle 6 besitzt. Für den Antriebsmotor 3 eignen sich sowohl Ausführungen mit Außenläufer, wie in den Beispielen der Fig. 1 bis 4, 7 und 8, als auch solche mit Innenläufer, wie im Beispiel der Fig. 5 und 6.

Weiter beinhaltet der Antriebsmotor 3 einen Statorträger 4, der einteilig mit einem motorgehäuseinnenseitigen Bereich 2d des Haltekörpers 2 ausgebildet ist.

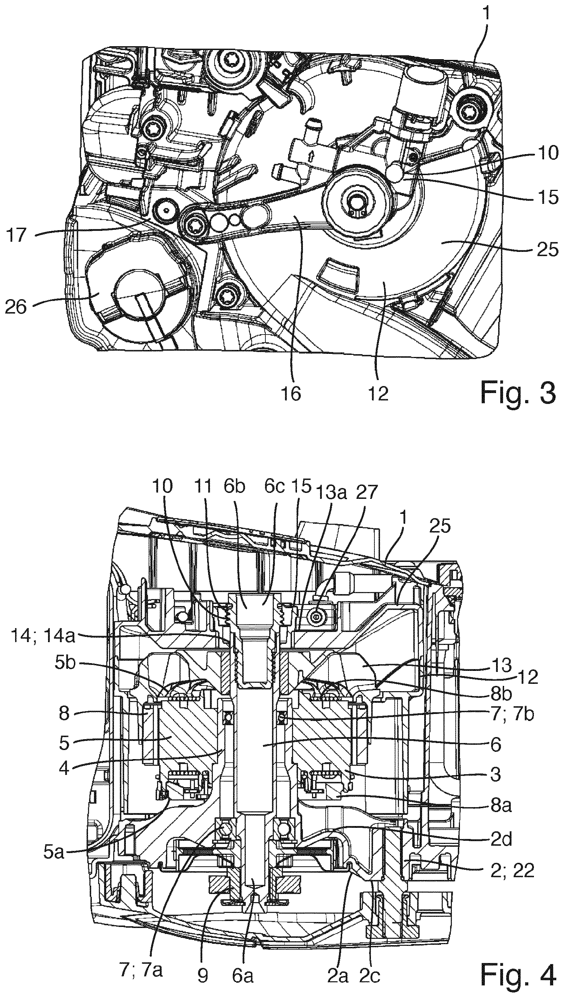

Das Bearbeitungsgerät beinhaltet des Weiteren einen an einen Schmiermittelpumpenantriebsbereich 6b der Antriebswelle 6 angekoppelten Schmiermittelpumpenantrieb 10 zum Antreiben einer im Motorgehäuse 1 angeordneten Schmiermittelpumpe zur Versorgung des Bearbeitungswerkzeugs mit Schmiermittel. Das Schmiermittel kann dazu, wie an sich bekannt, in einem Schmiermitteltank 26 bevorratet sein, wie beispielsweise aus den Fig. 1 und 3 ersichtlich. Dabei befinden sich der Schmiermittelpumpenantriebsbereich 6b und ein Werkzeugantriebsbereich 6a, mit dem die Antriebswelle 6 durch den Haltekörper 2 hindurchführt, auf entgegengesetzten Seiten 8a, 8b eines drehfest an der Antriebswelle 6 gehaltenen Rotors 8 des Antriebsmotors 3. In den diesbezüglich gezeigten Beispielen befindet sich der Schmiermittelpumpenantriebsbereich 6b auch auf einer dem Werkzeugantriebsbereich 6a entgegengesetzten Seite 5b eines Stators 5 des Antriebsmotors 3. Das Schmiermittel kann beispielsweise ein Schmieröl oder ein anderes Schmierfluid für die Sägekette einer Motorsäge sein. Im Fall der Ausführung als Motorsäge bildet der Werkzeugantriebsbereich 6a einen Kettenantriebsbereich, auf dem drehfest ein Kettenkoppelelement 9, auch als Kettenrad bezeichnet, zum Ankoppeln der Sägekette an die Motorwelle 6 angeordnet ist.

In entsprechenden Ausführungen befindet sich der Schmiermittelpumpenantriebsbereich 6b an einem motorgehäuseinneren Stirnendabschnitt 6c der Antriebswelle 6, wie beispielsweise in den Fig. 1, 2 und 4 gut zu erkennen. In alternativen Ausführungen ist für das Bearbeitungsgerät kein Schmiermittelpumpenantrieb vorgesehen oder der Schmiermittelpumpenantriebsbereich 6b und der Werkzeugantriebsbereich 6a befinden sich auf einer gleichen Seite des Rotors 8.

In Ausführungen als Motorsäge beinhaltet der Haltekörper 2, wie in den gezeigten Beispielen, typischerweise eine Schienenbefestigungsplatte 22, die zur Befestigung der Führungsschiene als Führungselement zum umlaufend rotationsbeweglichen Halten der Sägekette als Bearbeitungswerkzeug eingerichtet ist. Dabei kann der Haltekörper insgesamt von der Schienenbefestigungsplatte 22 gebildet sein oder alternativ einen oder mehrere weitere Haltekörperbereiche umfassen.

In konstruktiv vorteilhaften Ausführungen ist der Haltekörper 2 aus einem Metallmaterial oder einem biegesteifen Kunststoffmaterial gebildet. Beispielsweise kann der Haltekörper 2 ein durch eine Magnesium-Druckgusstechnik hergestelltes Magnesiumgussteil sein.

In entsprechenden Realisierungen ist ein Stator 5 des Antriebsmotors 3 auf den Statorträger 4 aufgepresst gehalten. Zusätzlich oder alternativ kann der Stator 5 unter Verwendung eines weiteren bzw. anderen Verbindungsmittels am Statorträger 4 gehalten sein, z.B. durch Schraubverbindungen 23, wie in Fig. 5 gezeigt.

In entsprechenden Realisierungen beinhaltet der Antriebsmotor 3 ein Motorlager 7, das auf einer Innenseite 2b und einer Außenseite 2a des Haltekörpers 2 jeweils mindestens eine Lagereinheit 7a, 7b umfasst. Damit kann die Antriebswelle 6 in einer für viele Anwendungsfälle günstigen Weise auf beiden Seiten des Haltekörpers 2 gelagert werden, wie beispielsweise in der Ausführung gemäß Fig. 1 realisiert.

In vorteilhaften Ausführungsformen beinhaltet das Bearbeitungsgerät zudem ein Lüftergebläse 12 mit einem vom Antriebsmotor 3 antreibbaren, koaxial zur Antriebswelle 6 angeordneten Lüfterrad 13, wobei sich der Schmiermittelpumpenantriebsbereich 6b auf einer dem Rotor 8 abgewandten Seite 13a des Lüfterrads 13 befindet, wie in den Beispielen der Fig. 1 bis 4, oder ein Schmiermittelpumpenkoppelelement 11 des Schmiermittelpumpenantriebs 10 einteilig mit dem Lüfterrad 13 gebildet ist, wie im Beispiel der Fig. 5 und 6.

Speziell bildet im Ausführungsbeispiel der Fig. 5 und 6 der Schmiermittelpumpenantrieb 10 ein Getriebe mit einem Zahnrad 24, das einerseits einen Außenzahnkranz aufweist, über den es mit dem als korrespondierender Zahnkranz an der rotorabgewandten Seite 13a des Lüfterrads 13 gebildeten Schmiermittelpumpenkoppelelement 11 in Eingriff steht, und das andererseits über ein Schneckenrad 24a mit einem pumpenseitigen Ritzel zusammenwirkt, das nur schematisch anhand eines Platzhalters 24b gezeigt ist. Diese Ausführung hat den Vorteil, dass die Schmiermittelpumpe vergleichsweise nahe am Schmiermitteltank 26 positioniert werden kann. Zudem bleibt die axiale Baulänge des Motoraufbaus des Antriebsmotors 3 in diesem Fall unbeeinflusst von der axialen Länge des Schneckenrads 24a des Schmiermittelpumpenantriebs 10.

In vorteilhaften Ausführungen weist das Bearbeitungsgerät eine Abstützeinrichtung 14 zwischen einem Schmiermittelpumpengehäuse 15 und der Antriebswelle 6 auf. Dazu beinhaltet die Abstützeinrichtung 14 beispielsweise einen lagerfreien Abstützabschnitt 14a des Schmiermittelpumpengehäuses 15, wie in den Ausführungsbeispielen der Fig. 1 und 4 realisiert, oder eine Pumpengehäuse-Lagereinheit 14b, wie im Ausführungsbeispiel der Fig. 2 und 3 realisiert. In den gezeigten Beispielen ist mittels der Abstützeinrichtung 14 das Schmiermittelpumpengehäuse 15 an der Antriebswelle 6 abgestützt. In alternativen Ausführungen ist die Abstützeinrichtung 14 derart gewählt, dass sich mit ihr die Antriebswelle 6 am Schmiermittelpumpengehäuse 15 abstützt. Im letztgenannten Fall ist das Schmiermittelpumpengehäuse 15 mit entsprechend hoher Stabilität ausgeführt und angeordnet.

In entsprechenden Ausführungen beinhaltet das Bearbeitungsgerät eine Schmiermittelpumpengehäusehalterung 16, mit der das Schmiermittelpumpengehäuse 15 am Motorgehäuse 1 oder an einem mit dem Motorgehäuse 1 starr verbundenen Bauteil 17 gehalten ist. Im Ausführungsbeispiel der Fig. 2 und 3 ist die Schmiermittelpumpengehäusehalterung 16 ein Haltearm, der an einer mit dem Motorgehäuse 1 starr verbundenen Wandungsstruktur befestigt ist und sich radial und mit geringem axialem Abstand zu einem Lüftergehäuse 25 des Lüftergebläses 12 erstreckt. Bei diesem Bauteil 17 kann es sich z.B. um den Schmiermitteltank 26 handeln, wenn dieser in einer entsprechend stabilen Ausführung gebaut ist, wie im Beispiel der Fig. 2 und 3, z.B. als Magnesium-Druckgussteil.

Der von dieser Ausführung der Schmiermittelpumpengehäusehalterung 16 gebildete Haltearm ermöglicht eine stabile Abstützung des Schmiermittelpumpengehäuses 15 am Motorgehäuse 1 bzw. dem stabilen Bauteil 17, so dass das Schmiermittelpumpengehäuse 15 selbst mit relativ geringem Gewicht gebaut sein kann und keine größeren Kräfte aus dem Antriebsstrang aufnehmen braucht. Auch das Lüftergehäuse 25 kann in diesem Fall sehr filigran bzw. mit geringem Gewicht ausgeführt und lediglich zur Erfüllung seiner Gebläseluftführungsfunktion ausgelegt sein.

Im Ausführungsbeispiel der Fig. 4 ist das Lüftergehäuse 25 deutlich steifer und damit stabiler ausgeführt als im Beispiel der Fig. 2 und 3, was es in diesem Fall ermöglicht, einen die Schmierölpumpe enthaltenden Schmierölpumpenaufbau 27 bzw. das Schmiermittelpumpengehäuse 15 am Lüftergehäuse 25 zu halten. Gleiches ist vorzugsweise beim Ausführungsbeispiel von Fig. 1 vorgesehen.

In vorteilhaften Ausführungsformen ist eine Bremstrommel 18 mit einem topfförmigen Querschnitt auf der Antriebswelle 6 des Antriebsmotors 3 axial zwischen dem Rotor 8 und dem Werkzeugantriebsbereich 6a drehfest angeordnet, wobei das Motorlager 7 für die Antriebswelle 6 eine axial mit der Bremstrommel 18 überlappende Lagereinheit 7c aufweist, wie in den Beispielen der Fig. 1 bis 4 realisiert. Dabei überlappt die Lagereinheit 7c mit der axialen Erstreckung der Bremstrommel 18 im Beispiel von Fig. 2 vollständig, in den Beispielen der Fig. 1 und 4 jeweils partiell.

Durch die Überlappung lässt sich eine besonders kurze axiale Bauform für die Antriebswelle 6 bzw. den Gesamtaufbau des Antriebsmotors 3 bei gleichzeitiger Bereitstellung der mechanischen Bremswirkung durch die Bremstrommel 18 erzielen. Für diese mechanische Bremswirkung kann die Bremstrommel 18 z.B. mit einem außenseitig an ihrer Mantelfläche angeordneten Bremsbelag 18a, wie in Form eines umlaufenden Bremsbands, versehen sein. Die mit der Bremstrommel 18 überlappende Lagereinheit 7c kann in entsprechenden Ausführungen, wie in den diesbezüglichen gezeigten Beispielen, gleichzeitig die Lagereinheit 7a an der Außenseite 2a des Haltekörpers 2 bilden.

Wie die gezeigten und die weiteren oben erwähnten Ausführungsbeispiele deutlich machen, stellt die Erfindung ein vorteilhaftes handgeführtes Bearbeitungsgerät mit elektrischem Antriebsmotor, Motorgehäuse und seitlich an diesem angeordnetem Haltekörper für ein vom Antriebsmotor antreibbares Bearbeitungswerkzeug zur Verfügung, bei dem sich ein Schmiermittelpumpenantriebsbereich und ein Werkzeugantriebsbereich der Antriebswelle des Antriebsmotors auf entgegengesetzten Seiten eines Rotors des Antriebsmotors befinden. Des Weiteren kann ein Statorträger für einen Stator des Antriebsmotors einteilig mit einem motorgehäuseinnenseitigen Bereich des Haltekörpers ausgebildet sein.

Das Anordnen des Schmiermittelpumpenantriebs auf derjenigen Rotorseite, die der Werkzeugankopplung an die Antriebswelle gegenüberliegt, bietet verschiedene Vorteile, wie eine Verkürzung eines Abstands von Hauptlager der Antriebswelle und Antriebsritzel für das Werkzeug und dadurch eine Reduzierung von Querkräften auf das Ritzel, was wiederum unter sonst gleichen Gegebenheiten einen kleineren Durchmesser und eine kürzere axiale Länge der Antriebswelle sowie aufgrund der geringeren Belastung einen kleiner bauenden Statorträger mit damit einhergehender deutlicher Gewichtsreduktion ermöglicht. Der Stator-/Rotoraufbau des Antriebsmotors kann mit relativ geringem axialem Abstand zur Werkzeugankopplung an die Antriebswelle positioniert sein, wodurch sich der Schwerpunkt des Antriebsmotors relativ nahe an eine Längsmittelachse des Geräts bringen lässt, was dem Benutzer die Handhabbarkeit und insbesondere die Schwenkbarkeit des Bearbeitungsgeräts erleichtern kann. Die einteilige Ausführung des Statorträgers mit dem Haltekörper für das Werkzeug trägt zu einer Minimierung der Anzahl erforderlicher Bauteile und zur Stabilität der Anbindung von Antriebsmotor einerseits und Bearbeitungswerkzeug andererseits an den Haltekörper bei.

## Patentansprüche

1. Handgeführtes Bearbeitungsgerät mit
- einem Motorgehäuse (1),
- einem in einem Seitenbereich des Motorgehäuses (1) angeordneten Haltekörper (2) zum Halten eines vom Motorgehäuse (1) abragenden Führungselements für ein rotierendes oder um das Führungselement umlaufenden Bearbeitungswerkzeugs,
- einem im Motorgehäuse (1) angeordneten elektrischen Antriebsmotor (3) zum Antreiben des Bearbeitungswerkzeugs, wobei der Antriebsmotor (3) eine mit einem Werkzeugantriebsbereich (6a) durch den Haltekörper (2) hindurch führende Antriebswelle (6) und einen drehfest an der Antriebswelle (6) gehaltenen Rotor (8) umfasst, und
- einem an einen Schmiermittelpumpenantriebsbereich (6b) der Antriebswelle (6) angekoppelten Schmiermittelpumpenantrieb (10) zum Antreiben einer im Motorgehäuse (1) angeordneten Schmiermittelpumpe zur Versorgung des Bearbeitungswerkzeugs mit Schmiermittel,
- wobei sich der Schmiermittelpumpenantriebsbereich (6b) und der Werkzeugantriebsbereich (6a) der Antriebswelle (6) auf entgegengesetzten Seiten (8a, 8b) des Rotors (8) befinden und
- wobei der Haltekörper (2) einen motorgehäuseaußenseitigen Bereich (2c) aufweist, der zum Halten des vom Motorgehäuse (1) abragenden Führungselements für das rotierende oder um das Führungselement umlaufende Bearbeitungswerkzeug eingerichtet ist,
**dadurch gekennzeichnet, dass**
- der Antriebsmotor (3) einen Statorträger (4) umfasst, der einteilig mit einem motorgehäuseinnenseitigen Bereich (2d) des Haltekörpers (2) ausgebildet ist.

2. Handgeführtes Bearbeitungsgerät nach Anspruch 1, weiter **dadurch gekennzeichnet, dass** sich der Schmiermittelpumpenantriebsbereich (6b) an einem motorgehäuseinneren Stirnendabschnitt (6c) der Antriebswelle (6) befindet.

3. Handgeführtes Bearbeitungsgerät nach Anspruch 1 oder 2, weiter **gekennzeichnet durch** ein Lüftergebläse (12) mit einem vom Antriebsmotor (3) antreibbaren, koaxial zur Antriebswelle (6) angeordneten Lüfterrad (13), wobei sich der Schmiermittelpumpenantriebsbereich (6b) auf einer dem Rotor (8) abgewandten Seite (13a) des Lüfterrades (13) befindet oder ein Schmiermittelpumpenkoppelelement (11) des Schmiermittelpumpenantriebs (10) einteilig mit dem Lüfterrad (13) gebildet ist.

4. Handgeführtes Bearbeitungsgerät nach einem der Ansprüche 1 bis 3, weiter **gekennzeichnet durch** eine Abstützeinrichtung (14) zwischen einem Schmiermittelpumpengehäuse (15) und der Antriebswelle (6), wobei die Abstützeinrichtung (14) einen lagerfreien Abstützabschnitt (14a) des Schmiermittelpumpengehäuses (15) oder eine Pumpengehäuse-Lagereinheit (14b) beinhaltet.

5. Handgeführtes Bearbeitungsgerät nach einem der Ansprüche 1 bis 4, weiter **gekennzeichnet durch** eine Schmiermittelpumpengehäusehalterung (16), mit der das Schmiermittelpumpengehäuse (15) am Motorgehäuse (1) oder an einem mit dem Motorgehäuse (1) starr verbundenen Bauteil (17) gehalten ist.

6. Handgeführtes Bearbeitungsgerät nach einem der Ansprüche 1 bis 5, weiter **dadurch gekennzeichnet, dass**
- auf der Antriebswelle (6) axial zwischen dem Rotor (8) und dem Werkzeugantriebsbereich (6a) drehfest eine Bremstrommel (18) mit einem topfförmigen Querschnitt angeordnet ist und
- ein Motorlager (7) für die Antriebswelle (6) eine axial mit der Bremstrommel (18) überlappende Lagereinheit (7c) aufweist.

7. Handgeführtes Bearbeitungsgerät nach einem der Ansprüche 1 bis 6, weiter **dadurch gekennzeichnet, dass** es als Motorsäge ausgeführt ist und der Haltekörper (2) eine Schienenbefestigungsplatte (22) beinhaltet, die zur Befestigung einer Führungsschiene als Führungselement zum umlaufend rotationsbeweglichen Halten einer Sägekette als Bearbeitungswerkzeug eingerichtet ist.

8. Handgeführtes Bearbeitungsgerät nach einem der Ansprüche 1 bis 7, weiter **dadurch gekennzeichnet, dass** der Haltekörper (2) aus einem biegesteifen Kunststoffmaterial oder Metallmaterial gebildet ist.

9. Handgeführtes Bearbeitungsgerät nach Anspruch 8, weiter **dadurch gekennzeichnet, dass** der Haltekörper (2) ein Magnesiumgussteil ist.

10. Handgeführtes Bearbeitungsgerät nach einem der Ansprüche 1 bis 9, weiter **dadurch gekennzeichnet, dass** ein Stator (5) des Antriebsmotors (3) auf den Statorträger (4) aufgepresst gehalten ist.

11. Handgeführtes Bearbeitungsgerät nach einem der Ansprüche 1 bis 10, weiter **dadurch gekennzeichnet, dass** ein Motorlager (7) des Antriebsmotors (3) auf einer Innenseite (2b) und einer Außenseite (2a) des Haltekörpers (2) jeweils mindestens eine Lagereinheit (7a, 7b) beinhaltet.

## Claims

1. Hand-guided treatment device, comprising
- a motor housing (1),
- a retaining body (2) arranged in a side region of the motor housing (1) for holding a guide element protruding from the motor housing (1) for a treatment tool which rotates or circulates around the guide element,
- an electric drive motor (3) arranged in the motor housing (1) for driving the treatment tool, wherein the drive motor (3) comprises a drive shaft (6) with a tool drive region (6a) passing through the retaining body (2), and a rotor (8) held rotationally fixedly on the drive shaft (6), and
- a lubricant pump drive (10) coupled to a lubricant pump drive region (6b) of the drive shaft (6) for driving a lubricant pump arranged in the motor housing (1) for supplying lubricant to the treatment tool,
- wherein the lubricant pump drive region (6b) and the tool drive region (6a) of the drive shaft (6) are arranged on opposite sides (8a, 8b) of the rotor (8), and
- wherein the retaining body (2) comprises a region (2c) outside the motor housing which is configured for holding the guide element protruding from the motor housing (1) for the treatment tool which rotates or circulates around the guide element,
**characterized in that**
- the drive motor (3) comprises a stator carrier (4) which is formed integrally with a region (2d) of the retaining body (2) inside the motor housing.

2. Hand-guided treatment device according to Claim 1, further **characterized in that** the lubricant pump drive region (6b) is situated on a face end portion (6c) of the drive shaft (6) inside the motor housing.

3. Hand-guided treatment device according to Claim 1 or 2, further **characterized by** a ventilator fan (12) with a fan wheel (13) capable of being driven by the drive motor (3) and arranged coaxially to the drive shaft (6), wherein the lubricant pump drive region (6b) is situated on a side (13a) of the fan wheel (13) facing away from the rotor (8), or a lubricant pump coupling element (11) of the lubricant pump drive (10) is formed integrally with the fan wheel (13) .

4. Hand-guided treatment device according to any of Claims 1 to 3, further **characterized by** a support device (14) between a lubricant pump housing (15) and the drive shaft (6), wherein the support device (14) contains a bearingless support portion (14a) of the lubricant pump housing (15) or a pump housing bearing unit (14b).

5. Hand-guided treatment device according to any of Claims 1 to 4, further **characterized by** a lubricant pump housing bracket (16) which holds the lubricant pump housing (15) on the motor housing (1) or on a component (17) rigidly connected to the motor housing (1).

6. Hand-guided treatment device according to any of Claims 1 to 5, further **characterized in that**
- a brake drum (18) with pot-like cross-section is arranged rotationally fixedly on the drive shaft (6) axially between the rotor (8) and the tool drive region (6a), and
- a motor bearing (7) for the drive shaft (6) has a bearing unit (7c) which overlaps axially with the brake drum (18).

7. Hand-guided treatment device according to any of Claims 1 to 6, further **characterized in that** it is configured as a power saw and the retaining body (2) contains a rail fixing plate (22), which is configured for fixing a guide rail as a guide element in order to hold a saw chain so as to be rotationally movable in circulation as a treatment tool.

8. Hand-guided treatment device according to any of Claims 1 to 7, further **characterized in that** the retaining body (2) is made from a bend-resistant plastic material or metal material.

9. Hand-guided treatment device according to Claim 8, further **characterized in that** the retaining body (2) is a magnesium casting.

10. Hand-guided treatment device according to any of Claims 7 to 9, further **characterized in that** a stator (5) of the drive motor (3) is held pressed onto the stator carrier (4).

11. Hand-guided treatment device according to any of Claims 7 to 10, further **characterized in that** a motor bearing (7) of the drive motor (3) comprises at least one bearing unit (7a, 7b) on each of an inside (2b) and an outside (2a) of the retaining body (2).

## Revendications

1. Appareil de traitement à guidage manuel, comprenant
- un boîtier de moteur (1),
- un corps de maintien (2) agencé dans une zone latérale du boîtier du moteur (1) de façon à maintenir un élément de guidage dépassant du boîtier du moteur (1) pour un outil de traitement rotatif ou tournant autour de l'élément de guidage,
- un moteur d'entraînement électrique (3) agencé dans le boîtier de moteur (1) pour entraîner l'outil de traitement, le moteur d'entraînement (3) comprenant un arbre d'entraînement (6) qui traverse le corps de maintien (2) par une zone (6a) d'entraînement d'outil et un rotor (8) maintenu solidaire en rotation sur l'arbre d'entraînement (6), et
- un moyen (10) d'entraînement de pompe à lubrifiant relié à une zone (6b) d'entraînement de pompe à lubrifiant de l'arbre d'entraînement (6) pour l'entraînement d'une pompe à lubrifiant agencée dans le boîtier de moteur (1) en vue de l'alimentation de l'outil de traitement en lubrifiant,
- la zone (6b) d'entraînement de pompe à lubrifiant et la zone (6a) d'entraînement d'outil de l'arbre d'entraînement (6) étant situées sur des côtés opposés (8a, 8b) du rotor (8), et
- le corps de maintien (2) présentant une zone (2c) du côté extérieur du boîtier de moteur, qui est aménagée de façon à maintenir l'élément de guidage dépassant du boîtier de moteur (1) pour l'outil de traitement rotatif ou tournant autour de l'élément de guidage,
**caractérisé en ce que**
- le moteur d'entraînement (3) comprend un support de stator (4) qui est réalisé en une seule pièce avec une zone (2d) du corps de maintien (2) située à l'intérieur du boîtier du moteur.

2. Appareil de traitement à guidage manuel selon la revendication 1, **caractérisé en outre en ce que** la zone (6b) d'entraînement de pompe à lubrifiant se trouve sur une portion d'extrémité frontale (6c) de l'arbre d'entraînement (6), située à l'intérieur du boîtier du moteur.

3. Appareil de traitement à guidage manuel selon la revendication 1 ou la revendication 2, **caractérisé en outre par** un ventilateur soufflant (12) ayant une roue de ventilateur (13) apte à être entraînée par le moteur d'entraînement (3) et agencée coaxialement à l'arbre d'entraînement (6), la zone (6b) d'entraînement de pompe à lubrifiant se trouvant sur un côté (13a) de la roue de ventilateur (13) opposé au rotor (8), ou un élément d'accouplement (11) de la pompe à lubrifiant du moyen (10) d'entraînement de pompe à lubrifiant étant formé en une seule pièce avec la roue de ventilateur (13).

4. Appareil de traitement à guidage manuel selon l'une des revendications 1 à 3, **caractérisé en outre par** un dispositif de support (14) situé entre un corps (15) de pompe à lubrifiant et l'arbre d'entraînement (6), le dispositif de support (14) comprenant une portion (14a), dépourvue de roulement, de support du corps (15) de pompe à lubrifiant, ou une unité (14b) formant roulement, de corps de pompe.

5. Appareil de traitement à guidage manuel selon l'une des revendications 1 à 4, **caractérisé en outre par** un support (16) de corps de pompe à lubrifiant, au moyen duquel le corps (15) de pompe à lubrifiant est maintenu sur le boîtier de moteur (1) ou sur un composant (17) relié rigidement au boîtier de moteur (1).

6. Appareil de traitement à guidage manuel selon l'une des revendications 1 à 5, **caractérisé en outre en ce que**
- un tambour de frein (18) ayant une section transversale en forme de coupelle est agencé sur l'arbre d'entraînement (6), axialement entre le rotor (8) et la zone (6a) d'entraînement d'outil et sans pouvoir tourner, et
- un roulement de moteur (7) pour l'arbre d'entraînement (6) présente une unité de roulement (7c) qui est axialement en chevauchement avec le tambour de frein (18).

7. Appareil de traitement à guidage manuel selon l'une des revendications 1 à 6, **caractérisé en outre en ce qu'**il est réalisé sous la forme d'une tronçonneuse et **en ce que** le corps de maintien (2) contient une plaque de fixation de guide-chaîne (22) qui est aménagée pour la fixation d'un guide-chaîne en tant qu'élément de guidage pour le support mobile en rotation d'une chaîne de scie en tant qu'outil de traitement.

8. Appareil de traitement à guidage manuel selon l'une des revendications 1 à 7, **caractérisé en outre en ce que** le corps de maintien (2) est formé d'un matériau plastique ou d'un matériau métallique résistant à la flexion.

9. Appareil de traitement à guidage manuel selon la revendication 8, **caractérisé en outre en ce que** le corps de maintien (2) est une pièce moulée en magnésium.

10. Appareil de traitement à guidage manuel selon l'une des revendications 1 à 9, **caractérisé en outre en ce qu'**un stator (5) du moteur d'entraînement (3) est maintenu par pression sur le support de stator (4).

11. Appareil de traitement à guidage manuel selon l'une des revendications 1 à 10, **caractérisé en outre en ce qu'**un roulement de moteur (7) du moteur d'entraînement (3) comprend, sur un côté intérieur (2b) et un côté extérieur (2a) du corps de maintien (2), au moins une unité (7a, 7b) formant roulement.
